Europäisches Patentamt

European Patent Office

Office européen des brevets

(19)

(11) Numéro de publication : **0 454 525 A1**

(12)

# DEMANDE DE BREVET EUROPEEN

(21) Numéro de dépôt : **91400945.1**

(51) Int. Cl.⁵ : **B62D 33/06**

(22) Date de dépôt : **09.04.91**

(30) Priorité : **27.04.90 FR 9005375**

(43) Date de publication de la demande :
**30.10.91 Bulletin 91/44**

(84) Etats contractants désignés :
**DE GB IT**

(71) Demandeur : **RENAULT VEHICULES
INDUSTRIELS Société Anonyme dite:
129 rue Servient "La Part Dieu"
F-69003 Lyon (FR)**

(72) Inventeur : **Moscicki
"Le Varvaray"
F-38790 Charantonnay (FR)**

(74) Mandataire : **Ernst-Schonberg, Michel
REGIE NATIONALE DES USINES RENAULT
SA, Sce 0267, 860, quai de Stalingrad
F-92109 Boulogne Billancourt Cédex (FR)**

(54) **Dispositif de suspension d'une cabine de conduite par rapport à un châssis.**

(57)     L'invention se rapporte aux véhicules utilitaires.
     Elle concerne un dispositif de suspension d'une cabine de conduite (2) par rapport au châssis (1) d'un véhicule automobile, caractérisé en ce qu'il comprend :
     — quatre cylindres hydrauliques (5a-5d) constitués chacun d'un corps creux relié au châssis et d'un piston (9) pouvant coulisser axialement dans ledit corps et délimitant une chambre supérieure (10) et une chambre inférieure (11), le piston étant solidaire d'une première tige (12) reliée à la cabine et d'une deuxième tige (13) reliée au châssis, et des conduits (17a-17d) remplis de fluide pratiquement incompressible et reliant la chambre supérieure d'un cylindre donné à la chambre inférieure du cylindre qui lui est diagonalement opposé.

EP 0 454 525 A1

La présente invention se rapporte à un dispositif de suspension notamment d'une cabine de conduite par rapport à un châssis d'un véhicule automobile.

Dans les dispositifs connus actuellement, il est prévu de suspendre la cabine par rapport au châssis, généralement constitué de deux longerons latéraux, grâce à un dispositif mécanique, tel que barre de torsion ou autre, disposé entre cette cabine et les longerons.

Ces dispositifs, bien que donnant partiellement satisfaction, présentent néanmoins quelques inconvénients.

En premier lieu, ces dispositifs sont lourds et encombrants.

En second lieu, lors d'une brusque décélération du véhicule en mouvement, tel qu'un freinage par exemple, la cabine de conduite, de par son énergie cinétique emmagasinée, a tendance à subir un mouvement dans lequel l'avant de la cabine s'incline en direction du sol alors que l'arrière de cette cabine se soulève.

Dans ce mouvement, l'occupant du véhicule a une impression de "plongée" vers l'avant, ce qui est néfaste au confort de l'occupant et après ce mouvement de "plongée", la cabine de conduite, avant de trouver son état statique, subit un mouvement oscillatoire d'avant en arrière pouvant durer un certain temps, ce qui nuit également au confort de conduite de l'occupant de la cabine.

La présente invention se propose de remédier aux inconvénients ci-dessus en proposant un dispositif de suspension de conception et de fonctionnement très simple tout en procurant un grand confort à l'occupant de la cabine de conduite.

Plus particulièrement, l'invention concerne un dispositif de suspension d'une cabine de conduite par rapport au châssis d'un véhicule automobile, caractérisé en ce qu'il comprend :

– quatre cylindres hydrauliques constitués chacun d'un corps creux relié au châssis et d'un piston pouvant coulisser axialement dans ledit corps et délimitant une chambre supérieure et une chambre inférieure, ces chambres étant remplies d'un fluide pratiquement incompressible et le piston étant solidaire d'une première tige dirigée vers le haut et reliée à la cabine et d'une deuxième tige dirigée vers le bas et reliée au châssis, lesdits cylindres étant disposés sous la partie avant droite, la partie avant gauche, la partie arrière droite et la partie arrière gauche de la cabine, respectivement ; et des conduits remplis du fluide pratiquement incompressible et reliant la chambre supérieure d'un cylindre donné à la chambre inférieure du cylindre qui lui est diagonalement opposé.

Selon un mode de réalisation préféré, les tiges dirigées vers le bas sont reliées au châssis par l'intermédiaire d'un élément élastiquement déformable.

Selon un mode de réalisation également préféré, chaque conduit est muni d'un dispositif de réglage de la pression du fluide.

Selon un mode de réalisation particulier, le dispositif de réglage de la pression est constitué par un coussin gazeux.

L'invention sera mieux comprise à la lecture de la description qui va suivre, faite à titre d'exemple, et en référence à la figure unique qui montre schématiquement le dispositif de suspension selon la présente invention.

Sur cette figure, il est montré un châssis 1 de véhicule automobile supportant une cabine de conduite 2.

Le châssis 1 est généralement constitué de deux longerons latéraux parallèles espacés 3a et 3b, reliés entre eux par des traverses 4a et 4b.

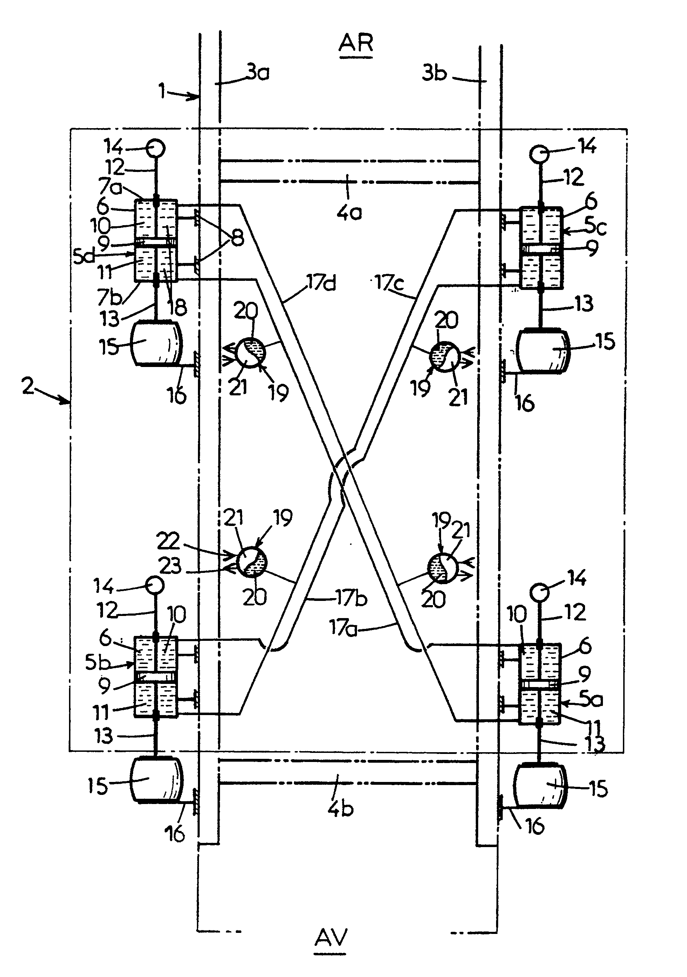

Dans la suite de la description, on supposera que la partie avant AV de la cabine correspond au bas de la figure 1, alors que la partie arrière AR correspond au haut de cette figure.

Selon la présente invention, la cabine de conduite 2 est suspendue par rapport au châssis 1 grâce à quatre cylindres hydrauliques 5a, 5b, 5c et 5d disposés verticalement entre le châssis 1 et la cabine de conduite 2.

Comme le montre la figure, deux cylindres 5a et 5b sont disposés à droite et à gauche, respectivement, de l'avant de la cabine alors que deux cylindres 5c et 5d sont disposés à droite et à gauche respectivement, de l'arrière de cette cabine.

Chaque cylindre hydraulique est formé d'un corps creux 6, de forme générale cylindrique, fermé par des parois d'extrémité 7a, 7b et fixé en 8 sur le châssis et d'un piston 9 plein, de forme épousant celle de la paroi interne du corps creux 6, disposé dans celui-ci d'une manière étanche tout en étant libre de se déplacer axialement dans ce corps creux.

Le piston 9 délimite, dans le corps creux, une chambre supérieure 10 située au-dessus du piston et une chambre inférieure 11 située au-dessous dudit piston.

A partir de la face du piston 9 en regard de la chambre supérieure 10 s'étend vers le haut une première tige 12, ou tige supérieure, qui traverse la chambre supérieure et s'étend au-delà de la paroi d'extrémité 7a. De plus, à partir de la face de ce piston dirigée vers la chambre inférieure 11, s'étend vers le bas une seconde tige 13, ou tige inférieure, qui traverse cette chambre et s'étend au-delà de la paroi d'extrémité 7b du corps creux 6, la tige 12 et la tige 13, traversant les parois d'extrémité de manière étanche.

De ce fait, un déplacement du piston 9, par exemple vers le haut, entraîne une sortie d'une tige et une rentrée de l'autre tige.

Comme représenté sur la figure unique, l'extrémité libre de chaque tige supérieure 12 des cylindres hydrauliques 5a-5d est reliée en 14 à la cabine de conduite alors que l'extrémité libre de chaque tige inférieure 13 est reliée au châssis par l'intermédiaire d'éléments élastiquement déformables 15, tel qu'un élément caoutchouteux, cet élément caoutchouteux étant porté par des supports 16 fixés au châssis.

Par ailleurs, la chambre supérieure 10 d'un cylindre hydraulique donné est reliée par un conduit tel que 17a, 17b, 17c ou 17d, à la chambre inférieure 11 du cylindre hydraulique diagonalement opposé. Les chambres supérieures et inférieures 11 et les conduits 17 sont remplis d'un fluide pratiquement incompressible 18.

En pratique, chaque conduit 17 forme avec les chambres supérieure 10 et inférieure 11 auxquelles il est raccordé, un circuit hydraulique fermé indépendant des autres.

Ainsi, pour chaque circuit hydraulique, toute variation de volume d'une chambre d'un cylindre produit une même variation de volume dans la chambre opposée du cylindre à laquelle elle est reliée par l'un des conduits.

De manière avantageuse, il est prévu de disposer sur chaque conduit 17 un dispositif de réglage 19 de la pression dont le but est de permettre de régler la pression du fluide circulant entre la chambre supérieure d'un cylindre et la chambre inférieure du cylindre qui lui est connectée.

Ce dispositif de réglage comporte une chambre étanche 20 dans laquelle est prévu un coussin gazeux 21 dans lequel on peut faire varier la pression du gaz de façon à engendrer une variation de la pression du fluide dans le conduit sur lequel la chambre 20 est connectée et donc dans les chambres auxquelles ledit conduit est raccordé. Ceci permet de conférer une "élasticité" variable à la liaison hydraulique des chambres 10 et 11. La variation de la pression dans le coussin gazeux peut être obtenue par des moyens d'amenée 22 et de sortie 23 d'un gaz pressurisé.

La suspension ainsi définie permet de répondre à tous les mouvements que peut subir la cabine de conduite.

Ainsi, dans le cas où la cabine est soumise à un mouvement d'élévation par rapport au châssis tout en restant parallèle à celui-ci, mouvement dénommé rebond, les pistons 9 et les tiges 12, 13 associées débattent en phase, c'est-à-dire que les pistons se déplacent simultanément vers les chambres supérieures en entraînant les tiges 12 et 13 dans le même mouvement, grâce à une extension des éléments caoutchouteux 15. Dans ce cas, lors du déplacement des pistons 9, le volume des chambres supérieures 10 diminue et le fluide sortant de ces chambres passe directement dans les chambres inférieures 11 des cylindres en liaison par les conduits 17, lesdites chambres inférieures augmentant conséquemment de volume.

Grâce à cette circulation en circuit fermé entre les diverses chambres, l'amortissement de la cabine de conduite est conséquent tout en étant réalisé par le seul débit de fluide autorisé entre les chambres.

Dans le cas où la cabine de conduite est soumise à un mouvement d'oscillations longitudinales, dénommé galop, ou à un mouvement d'oscillations transversales, appelé roulis, le dispositif de suspension tel que défini permet de limiter les angles de galop et/ou les angles de roulis.

Dans le cas d'oscillations longitudinales, ou galop, la cabine de conduite 2 et plus particulièrement sa partie avant s'abaisse en direction du sol.

Dans ce mouvement, les pistons 9 des cylindres hydrauliques 5a et 5b sont poussés par les tiges 12 liées à la cabine, en direction des chambres inférieures 11, ce mouvement étant rendu possible par écrasement des éléments caoutchouteux 15 portés sur les supports 16.

Pendant ce mouvement, les chambres inférieures 11 des cylindres 5a et 5b diminuent de volume alors que les chambres supérieures 10 augmentent de volume.

Lors de la diminution du volume des chambres 11, le fluide incompressible contenu dans celles-ci est chassé, en ce qui concerne le cylindre 5a, en direction de la chambre supérieure 10 du cylindre 5d par le conduit 17d en remplissant cette chambre et, en ce qui concerne le cylindre 5b, en direction de la chambre supérieure 10 du cylindre 5c par le conduit 17c en remplissant également celle-ci du même volume que celui chassé hors de la chambre inférieure 11 du cylindre 5b.

De ce fait, les pistons 9 des cylindres 5c et 5d sont soumis, de par le remplissage des chambres supérieures 10, à un mouvement de sens et de déplacement égal à celui des pistons 9 des cylindres 5a et 5b et qui est rendu possible par écrasement également des éléments caoutchouteux 15 sur les supports 16. Grâce à cette disposition, la cabine de conduite, liée à sa partie arrière aux tiges 12, est soumise à un mouvement tel que ladite partie arrière se retrouve au même niveau que sa partie avant.

Cette situation est possible par le fait que les chambres inférieures 11 des cylindres 5c et 5d peuvent expulser le fluide contenu dans ces chambres respectivement par le conduit 17b vers la chambre supérieure 10 du cylindre 5b et par le conduit 17a vers la chambre supérieure 10 du cylindre 5a.

De ce fait, les pistons sont déplacés simultanément, dans le même sens et selon la même course, et les éléments caoutchouteux 15 sont écrasés de la même valeur.

Après suppression de l'origine du mouvement de galop, comme un freinage par exemple, les éléments caoutchouteux reprennent leurs configurations originales en repoussant les pistons 9 par les tiges 13 et le dispositif de suspension retrouve sa situation d'origine telle que celle représentée sur la figure.

Dans le cas où la cabine est soumise à un mouvement de roulis, le fonctionnement du dispositif de suspension sera analogue à celui décrit ci-dessus à la seule différence que les circulations de fluide se feront soit à partir des cylindres 5b et 5d vers les cylindres 5c et 5a, soit inversement.

Comme cela a été également décrit précédemment, la pression du fluide circulant entre les chambres supérieures 10 et inférieures 11 d'un cylindre vers les chambres inférieures 11 et supérieures 10 du cylindre qui lui est raccordé peut être facilement réglée par les dispositifs de variation de pression 19 et plus particulièrement en faisant varier les pressions des coussins gazeux 21 qui feront elles-mêmes varier la pression du fluide pratiquement incompressible circulant dans les conduits et les cylindres hydrauliques, cette variation permettant de régler la raideur globale du dispositif de suspension.

Bien entendu, pour les mouvements de très faibles amplitudes, la suspension de la cabine par rapport au châssis est assurée par les seuls-éléments caoutchouteux 15.

Il va de soi que le mode de réalisation décrit n'est qu'un exemple et l'on pourrait le modifier, notamment par substitution d'équivalents techniques sans sortir pour cela du cadre de l'invention. Il sera également possible d'exploiter un dispositif manuel ou automatique pour modifier la raideur globale du dispositif de suspension ainsi que l'amortissement des mouvements de la cabine.

**Revendications**

1. Dispositif de suspension d'une cabine de conduite (2) par rapport au châssis (1) d'un véhicule automobile, caractérisé en ce qu'il comprend :

   – quatre cylindres hydrauliques (5a-5d) constitués chacun d'un corps creux relié au châssis et d'un piston (9) pouvant coulisser axialement dans ledit corps et délimitant une chambre supérieure (10) et une chambre inférieure (11), ces chambres étant remplies d'un fluide pratiquement incompressible et le piston étant solidaire d'une première tige (12) dirigée vers le haut et reliée à la cabine et d'une deuxième tige (13) dirigée vers le bas et reliée au châssis, lesdits cylindres étant disposés sous la partie avant droite, la partie avant gauche, la partie arrière droite et la partie arrière gauche de la cabine, respectivement ; et des conduits (17a-17d) remplis du fluide pratiquement incompressible et reliant la chambre supérieure d'un cylindre donné à la chambre inférieure du cylindre qui lui est diagonalement opposé.

2. Dispositif selon la revendication 1, caractérisé en ce que les tiges dirigées vers le bas sont reliées au châssis par l'intermédiaire d'un élément (15) élastiquement déformable.

3. Dispositif selon la revendication 1, caractérisé en ce que chaque conduit est muni d'un dispositif (19) de réglage de la pression du fluide.

4. Dispositif selon la revendication 3, caractérisé en ce que le dispositif de réglage de la pression du fluide est constitué par un coussin gazeux (21).

# EP 0 454 525 A1

**Office européen des brevets**

# RAPPORT DE RECHERCHE EUROPEENNE

Numero de la demande

EP  91 40 0945

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-2107656 (DUNLOP)<br>* figure 1 *<br>--- | 1 | B62D33/06 |
| A | GB-A-2014522 (DAIMLER-BENZ)<br>----- | | |
| | | | **DOMAINES TECHNIQUES RECHERCHES (Int. Cl.5 )**<br><br>B62D |

Le présent rapport a été établi pour toutes les revendications

| Lieu de la recherche | Date d'achèvement de la recherche | Examinateur |
|---|---|---|
| BERLIN | 31 JUILLET 1991 | LUDWIG H.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)